# EUROPÄISCHE PATENTANMELDUNG

(11) **EP 0 994 145 A1**
(43) Veröffentlichungstag der Anmeldung: **19.04.2000**
(21) Anmeldenummer: 99119681.7
(22) Anmeldetag: 05.10.1999
(51) Int. Cl.: C08J 9/00, C08J 9/16, C08J 9/224

(54) **Schaumstoffe auf Basis von Styrolpolymerisaten**

(30) Priorität: 06.10.1998 DE 19845891
(71) Anmelder: E. Schwenk Dämmtechnik GmbH & Co. KG, D-86899 Landsberg (DE)
(72) Erfinder: Marzouki, Taieb, 27321 Thedinghausen (DE)
(74) Vertreter: Siewers, Gescha, Dr.

(57) **Zusammenfassung**

Die Erfindung betrifft Schaumstoffe auf Basis von Styrolhomopolymerisaten. Erfindungsgemäß werden Schaumstoffe auf Basis von Styrolpolymerisaten vorgeschlagen, die dadurch gekennzeichnet sind, daß sie 5-50 Gew.% expandierbaren hexagonalen Graphit enthalten. Die erfindungsgemäßen Styrolpolymerisaten können des weiteren übliche Zusatz- und/oder Hilfsstoffe in der Thermoplastenmatrix wie Antistatika, Stabilisatoren, Farbstoffe, Füllstoffe und/oder Keimbildner in üblichen Mengen enthalten. Die Herstellung der erfindungsgemäßen Schaumstoffe kann entweder dadurch erfolgen, daß expandierbarer Graphit auf die vorgeschäumten Partikel des Styrolpolymerisates, insbesondere in Perlform aufgebracht wird, oder daß das expandierbare Graphitmaterial auch dem ungeschäumten Styrolpolymerisat zugesetzt, indem das Graphitmaterial der Thermoplastenmatrix in noch nicht aufgeschäumten Zustand, ggf. zusammen mit anderen Additiven und/oder den Treibmitteln, zugesetzt und diese Mischung dann in an sich bekannter Weise weiter verarbeitet wird.

## Beschreibung

Die Erfindung betrifft Schaumstoffe auf Basis von Styrolhomopolymerisaten, dem sogenannten 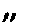 Standardpolystyrol" oder statistischen Copolymeren mit Acrylnitril (SAN), α-Methylstyrol (S/MS) oder Maleinsäureanhydrid (S/MA) sowie andere handelsübliche Mischpolymerisate wie beispielsweise solche mit Estern der Methacrylsäure, N-Vinylverbindungen oder auch Butadien, Divinylbenzol oder Butandiolacrylate. Aus Vereinfachungsgründen werden diese Homo- oder Mischpolymerisate im folgenden als PS bezeichnet.

Die Herstellung von Schaumstoffen aus PS-Polymerisaten ist bekannt, so werden Strukturschaumformteile meist spritzgegossen, während hingegen leichte geschäumte Halbzeuge wie Dämmplatten meist im Exdruderverfahren entweder mit PS mit eingearbeiteten physikalischen Treibmitteln oder direkt per Einspeisung solcher Treibmittel in den Extruder produziert werden. Für Partikelschäume werden Perlpolymerkugeln, in die ein niedrig siedendes Treibmittel, vorzugsweise Pentan, einpolymerisiert ist, eingesetzt, die dann in einem dreistufigen Schäumverfahren weiterverarbeitet werden. Dieses sogenannte 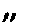 Styropor"-Verfahren beinhaltet als ersten Schritt ein Vorschäumen der treibmittelhaltigen Perlen mit durchströmenden Wasserdampf, wobei in einem zweiten Verfahrensschritt diese geschlossenen vorgeschäumten Partikel eine gewisse Zeit zwischengelagert werden, damit eine Stabilisierung folgen kann, denn der bei der Kondensation des Treibgases entstehende Unterdruck wird durch Eindiffundierung von Luft ausgeglichen. Partikelschaumblöcke und -formteile werden dann in der Regel auf vollautomatisierten Anlagen nach dem Dampfstoßvenfahren in Formwerkzeugen mit festen, aber perforierten Wänden hergestellt. Die Luft der Partikelschüttung wird aus vorgeschalteten Dampfkammern mit Wasserdampf unter Überdruck bestimmt und auf Erweichungstemperatur erhitzt, so daß der Schaumstoff über die Berührungsflächen der Partikel versintert.

PS-Schaumstoffe sind aufgrund ihres geringen Gewichtes und ihrer guten Wirkung zum Isolieren gegen Wärme bzw. Kälte, Schall, Vibrationen usw. hervorragende Dämmstoffe, die in großem Ausmaß zum Isolieren von Gebäuden oder Gebäudeteilen, aber auch im Fahrzeugbau, in der Fernmeldetechnik, für den Innenausbau sowie in der Möbel- und Feinwerktechnik eingesetzt werden.

PS-Schaumstoffe gelten hinsichtlich ihrer mechanischen und thermischen Eigenschaften als fast ideale Dämmstoffe, die allerdings den großen Nachteil einer leichten Entflammbarkeit aufweisen. PS-Schaumstoffe brennen leuchtend mit stark rußender Flamme und neigen zum, zum Teil auch brennendem, Abtropfen. Für die Verwendung solcher Schaumstoffe im bauaufsichtlichen Bereich gibt es daher eine Vielzahl von Vorschriften und auch das allgemeine Sicherheitsbedürfnis hat die Industrie veranlaßt, schwerer entflammbare PS-Schaumstoffe zu entwickeln. Als Flammschutzmittel werden meist Chlor oder Brom enthaltende organische Verbindungen eingesetzt, die bei Flammeneinwirkung Produkte abspalten, die die Sauerstoffzufuhr erschweren oder Brandreaktionen chemisch abbremsen. Phosphorhaltige Flammschutzmittel begünstigen außerdem die Verkohlung und Krustenbildung. Antimontrioxyd und andere Oxyde wie Aluminiumhydroxyd oder Kalzium-Magnesiumkarbonat wirken zum Teil synergistisch oder begünstigen eine flammenhemmende Krustenbildung im Brandfall.

Da aber die Sicherheitsanforderungen an das Brandverhalten erhöht wurden, besteht ein Bedürfnis danach, insbesondere die hier verwendeten Polystyrolschäume brandsicherer zu machen bzw. die im Brandfall vorhandenen Probleme zu reduzieren.

Erfindungsgemäß werden zur Lösung der Aufgabe Schaumstoffe auf Basis von Styrolpolymerisaten vorgeschlagen, die dadurch gekennzeichnet sind, daß sie 5-50 Gew.-% expandierbaren hexagonalen Graphit enthalten.

Expandierbarer hexagonaler Graphit, auch als 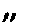 Blähgraphit^{"} bezeichnet, ist an sich bekannt. Dieser Graphit besteht aus hexagonalen Schichten von sp2-hybridisierten Kohlenstoff, wobei die dritte Schicht genau über der ersten angeordnet ist, sich also eine Schichtfolge A, B; A, B ... ergibt. Die Bindung innerhalb einer Schicht in stark kovalent, während zwischen den Schichten nur schwache van-der-Waalsche-Kräfte wirksam sind. Daraus ergibt sich die bekannte leichte Verschiebbarkeit parallel zur Basisschicht. In die Zwischenräume zwischen den Schichtebenen können Fremdatome oder Verbindungen eingelagert werden; in diesen Interkalationen bleiben die Fremdatome oder -verbindungen zwischen den Kohlenstoffschichten zeitlich unbegrenzt 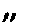 gefangen", da die Verbindungen sich im kondensierten Zustand befinden. Diese sogenannte Interkalation kann durch die Einwirkung starker Oxydationsmittel wie beispielsweise Schwefelsäure oder Salpetersäure gefördert werden, der Graphit läßt sich durch solche Oxydationsmittel aktivieren. Moleküle bei diesen Interkalationsverbindungen können gasförmige oder relativ leicht in den gasförmigen Zustand übergehende Verbindungen sein wie beispielsweise Halogene wie Chlor und Brom, aber auch Edelgase, Schwefeldioxid usw. Werden diese Interkalationsverbindungen rasch erwärmt, dehnen sich die eingeschlossenen Gase auf das etwa 1000fache ihres bisherigen Volumens aus, was im Ergebnis zu einem Aufblähen des Graphitkristalles durch die entweichenden Gase um das 80- bis 140fache des ursprünglichen Volumens führt. Expandierbarer hexagonaler Graphit wird beispielsweise als hochwertiges Dichtungsmaterial oder Schmiermittel eingesetzt.

Völlig überraschend wurde jetzt festgestellt, daß die Zugabe von derartigem expandierbarem Graphit zu Schaumstoffen auf Styrolpolymerisatbasis praktisch die Entflammbarkeit und Brennbarkeit solcher Schaumstoffe völlig verhindert. Es ist bekannt, daß auch nicht expandierbarer Graphit sehr schwer zu verbrennen ist, so kann Graphit in nicht oxydierender Atmosphäre bis 3.500 °C als Werkstoff verwendet werden. Zwar ist der genaue Reaktionsmechanismus des Schutzes von Polystyrolschaumstoffen durch den Zusatz von expandierbarem hexagonalem Graphit noch nicht vollständig geklärt, aber der Graphit bläht sich bei den Entzündungstemperaturen der Schaumstoffe stark auf, das heißt also, daß die im expandierbarem Graphit eingeschlossenen Gase austreten. Es wird daher vermutet, daß diese expandierenden Gase eine Entzündung des Kunststoffes verhindern, da sich eine nicht oxidierende Mikroatmophäre entwickelt, die zur Bildung einer Graphitschutzschicht oberhalb der Kunststoffoberfläche führt, die unter den gegebenen Bedingungen nicht weiter angegriffen wird. Daher entzündet sich der Kunststoff nicht und es erfolgt ebenfalls kein Abtropfen, das unter normalen Bedingungen bereits vor der Entzündungstemperatur einsetzt.

Der Gehalt an expandierbarem hexagonalem Graphit sollte etwa 5 - 50 Gew.-%, bezogen auf den Schaumstoff, betragen. Dieser kann des weiteren übliche Zusatz- und/oder Hilfsstoffe in der Thermoplastenmatrix wie Antistatika, Stabilisatoren, Farbstoffe, Füllstoffe und/oder Keimbildner in üblichen Mengen enthalten.

Die Herstellung der erfindungsgemäßen Schaumstoffe kann entweder dadurch erfolgen, daß expandierbarer Graphit auf die vorgeschäumten Partikel des Styrolpolymerisates, insbesondere in Perlform aufgebracht wird, indem diese außenseitig mit dem Graphitmaterial beschichtet oder benetzt werden. Erst anschließend findet dann eine Verschweißung der vorgeschäumten Styrolpolymerisatperlen zum Formkörper statt. Es ist aber auch möglich, das expandierbare Graphitmaterial auch dem ungeschäumten Styrolpolymerisat zuzusetzen, indem das Graphitmaterial der Thermoplastenmatrix in noch nicht aufgeschäumten Zustand, ggf. zusammen mit anderen Additiven und/oder den Treibmitteln, zugesetzt und diese Mischung dann in an sich bekannter Weise weiter verarbeitet wird.

Die Erfindung wird nunmehr anhand des Ausführungsbeispieles näher erläutert:

Perlpolymerkugeln aus Polystyrol oder dessen Copolymerisaten mit einem Durchmesser von etwa 2 mm für dünnerwandige und bis 3 mm für Blockschaum, in die niedrig siedender Kohlenwasserstoff, vorzugsweise Pentan als Treibmittel einpolymerisiert ist, sind unter verschiedenen Marken auf dem Markt erhältlich. Ebenfalls sind vorgeschäumte Perlpolymerkugeln ein marktübliches Produkt, bei dem die ersten beiden Stufen des sogenannten 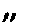 Styropor"-Verfahrens bereits durchgeführt wurden, nämlich Vorschäumen durch strömenden Wasserdampfes auf Partikel mit RG 10 - 20 kg/m³ für Block- und Trittschallmaterial oder 15 - 30 kg/m³ für Formteile sowie daran anschließendes Zwischenlagern zur Stabilisierung.

Partikelschaumbiöcke und -formteile werden in der Regel nach dem Dampfstoßverfahren in Formwerkzeugen mit festen, aber perforierten Wänden hergestellt. Die entlüftete Partikelschüttung wird aus vorgeschalteten Dampfkammern 5 - 50 Sekunden lang mit Wasserdampf von 3 - 4 bar beaufschlagt und dadurch auf Erweichungstemperatur erhitzt, so daß der Schaumstoff über die Berührungsflächen der Partikel perlenversintert. Anschließend wird der Dampf abgesaugt und das Erzeugnis entweder mit umlaufendem Wasser oder in einem gesonderten Kühlwerkzeug gekühlt und entformt.

Die Perlpartikel werden vor dem Anfüllen ins Formwerkzeug mit 25 Gew.-% Blähgraphit versetzt und sorgfältig durchmischt. Als Haftvermittler können bei Bedarf etwa 0,2 Gew.-% Butylstearat zugesetzt werden. Die Partikelfüllung wird dann entlüftet und in an sich bekannter Weise nach dem Dampfstoßverfahren zu Blöcken versintert.

Zur Entflammbarkeitsprüfung werden Formkörper aus dieser Mischung mit einer Zündflamme mit einer Temperatur von 1000 °C beflammt. Die Formkörper blähen sich auf, aber eine Entflammung und damit Flammenausbreitung erfolgt nicht. Außer einer Volumenvergrößerung tritt auch keine Formänderung auf. Ein Abtropfen ist ebenfalls nicht festzustellen.

## Patentansprüche

1. Schaumstoffe auf Basis von Styrolpolymerisaten, dadurch gekennzeichnet, daß sie einen Zusatz von 5 - 50 Gew.-% expandierbaren hexagonalen Graphit enthalten.

2. Schaumstoffe nach Anspruch 1, dadurch gekennzeichnet, daß der expandierbare Graphit sich außen auf den Styrolpolymerisatpartikeln vor dem Verfahrensschritt des Aufschäumens befindet.

3. Schaumstoffe nach Anspruch 1, dadurch gekennzeichnet, daß der expandierbare Graphit in das noch nicht aufgeschäumte Granulat zur Bildung des Schaumstoffs eingebettet ist.

4. Schaumstoffe nach Anspruch 1 oder 3, dadurch gekennzeichnet, daß der expandierbare Graphit zusammen mit einem Treibmittel in die noch nicht aufgeschäumten Partikel eingebettet ist.

5. Schaumstoffe nach Anspruch 1 oder 3-4, dadurch gekennzeichnet, daß das Treibmittel Pentan ist.
